# EUROPÄISCHE PATENTSCHRIFT

(11) **EP 1 797 286 B1**
(45) Veröffentlichungstag und Bekanntmachung des Hinweises auf die Patenterteilung: **08.08.2012**
(21) Anmeldenummer: 05782968.1
(22) Anmeldetag: 10.09.2005
(51) Int. Cl.: F01L 1/352, H02K 11/04

(54) **NOCKENWELLENVERSTELLER**
CAMSHAFT ADJUSTER
DISPOSITIF DE REGLAGE D'ARBRE À CAMES

(30) Priorität: 02.10.2004 DE 102004048173; 20.05.2005 DE 102005023202
(43) Veröffentlichungstag der Anmeldung: 20.06.2007
(73) Patentinhaber: Schaeffler Technologies AG & Co. KG, 91074 Herzogenaurach (DE)
(72) Erfinder: SCHÄFER, Jens, 91074 Herzogenaurach (DE); STEIGERWALD, Martin, 91056 Erlangen (DE)
(86) Internationale Anmeldenummer: PCT/EP2005/009737
(87) Internationale Veröffentlichungsnummer: WO 2006/039968

(56) Entgegenhaltungen:
- DE-A1- 10 215 727
- DE-A1- 10 242 659
- US-A1- 2003 005 899
- US-A1- 2003 127 921
- US-A1- 2003 222 532
- US-B1- 6 328 006
- PATENT ABSTRACTS OF JAPAN Bd. 1999, Nr. 09, 30. Juli 1999 (1999-07-30) & JP 11 107718 A (MAZDA MOTOR CORP), 20. April 1999 (1999-04-20)

## Beschreibung

### Gebiet der Erfindung

Die Erfindung betrifft einen Nockenwellenversteller mit einem in einem ersten Gehäuse angeordneten elektrischen Stellmotor und einem Elektronikmodul, welches einer elektrischen Beaufschlagung des Stellmotors dient, insbesondere nach dem Oberbegriff des Anspruchs 1.

### Hintergrund der Erfindung

Aus der DE 103 17 607 A7 ist ein Nockenweflenversteiler bekannt, welcher einer, Verstellung der relativen Winkellage zwischen einem Antriebskettenrad und einer Nockenwelle unter Zwischenschaltung eines über einen elektrischen Stellmotor verstellbaren Getriebes zur Beeinflussung der Steuerzeiten einer Brennkraftmaschine dient. Antriebskettenrad, Nockenwelle und Getriebe sind im Bereich eines Bügels angeordnet, welcher an die Brennkraftmaschine angeschraubt ist. An dem Bügel stützt sich ein Gehäuse ab, welches den elektrischen Stellmotor aufnimmt und aus welchem in Richtung des Getriebes eine Stellwelle des elektrischen Stellmotors ragt. In dem Gehäuse ist eine Sensoreinheit auf dem äußeren Umfang der Stellwelle fixiert, welche die Stärke von Magnetpolen des Stellmotors erfasst. Weiterhin ist innerhalb des Gehäuses eine Stromzufuhrsteuereinheit aufgenommen, die direkt an den Stellmotor angeklebt ist. Die Stromzuführsteuereinheit besitzt einen Antriebskreis, der den Stellmotor mit elektrischem Strom versorgt, und einen Steuerkreis, der einer Steuerung des elektrischen Stromes dient, der dem elektrischen Stellmotor zugeführt wird. Gemäß einem weiteren Ausführungsbeispiel des Standes der Technik besitzt das Gehäuse Öffnungen, durch welche ein Luftstrom zur Kühlung der Stromzuführsteuereinheit geleitet werden kann.
*Auch die Druckschrift* US2003/0005899 *offenbart einen Nockenwellenversteller mit einem elektrischen Stellmotor.*

### Aufgabe der Erfindung

Der Erfindung liegt die Aufgabe zugrunde, einen Nockenwellenversteller zu schaffen, welcher hinsichtlich der Montage und/oder Funktionalität der elektronischen Bauteile verbessert ist.

### Zusammenfassung der Erfindung

Erfindungsgemäß wird die Aufgabe durch die Merkmale des unabhängigen Patentanspruchs 1 gelöst. Es ist ein zweigeteiltes Gehäuse vorgesehen, nämlich ein erstes Gehäuse, welches den elektrischen Stellmotor aufnimmt bzw. lagert, und ein zweites Gehäuse, welches einer Aufnahme bzw. Lagerung des Elektronikmoduls dient. Bei dem Elektronikmodul kann es sich um mindestens ein elektrisches Bauteil handeln, welche für den Betrieb des Stellmotors erforderlich ist oder dient und welches nicht unmittelbar dem Stellmotor zuzuordnen ist. Beispielsweise handelt es sich bei dem Elektronikmodul um ein Leistungsteil, welches der elektrischen Energieversorgung des Stellmotors dient, und/oder ein Logikteil, welches beispielsweise einerseits Ausgabesignale hinsichtlich Betriebsparameter des Stellmotors erzeugt und/oder einer Regelung oder Steuerung des Stellmotors dient. Weitere mögliche Elemente des Elektronikmoduls können eine Endstufe, Transistoren, ein Endstufentreiber, Kommutierungseinrichtungen, eine Lageregelung, eine Drehzahlregelung, eine Stromregelung oder eine Momentenregelung sein. Die vorgenannten Bauteile können sämtlich in dem zweiten Gehäuse angeordnet sein oder nur ein Teil derselben, so dass weitere Bauteile entweder im ersten Gehäuse angeordnet sind, unmittelbar dem elektrischen Stellmotor zugeordnet sind oder aber dezentral, beispielsweise im Bereich eines vorhandenen Motorsteuergerätes vorgesehen sind.

Das Elektronikmodul ist in dem zweiten Gehäuse angeordnet. Hierbei kann das zweite Gehäuse mehrere Funktionen erfüllen. Zunächst kann das zweite Gehäuse einen abgedichteten Innenraum bilden, welcher gegen den Eintritt von Fremdpartikeln von außen geschützt ist und andererseits etwaige im Innenraum des Gehäuses angeordnete Medien an einem Austritt nach außen hindert. Alternativ oder zusätzlich kann das zweite Gehäuse einer Abstützung des Elektronikmoduls bereitstellen, wenn das Elektronikmodul an diesem befestigt ist. Darüber hinaus bildet das zweite Gehäuse einen Schutz des Elektronikmoduls vor mechanischen oder elektrischen Einwirkungen von außen.

Das zweite Gehäuse ist von außen an dem ersten Gehäuse befestigt. Durch eine Ausbildung des Nockenwellenverstellers mit dem ersten Gehäuse und dem zweiten Gehäuse können erstes Gehäuse mit Stellmotor und zweites Gehäuse mit Elektronikmodul separate Einheiten bilden, für welche eine separate Fertigung, Lieferung und/oder Montage bzw. Demontage möglich ist. Beispielsweise kann im Zuge einer Wartung entweder das erste Gehäuse separat geöffnet werden, um auf den elektrischen Stellmotor zugreifen zu können, oder das zweite Gehäuse, um beispielsweise Reparatur- und Wartungsarbeiten an dem Elektronikmodul vorzunehmen. Weiterhin ist es durch die separate Ausbildung des ersten und zweiten Gehäuses möglich, für das Material der Gehäuse unterschiedliche Materialien entsprechend den Anforderungen auszuwählen, wodurch die Gestaltungsvielfalt vergrößert ist. Beispielsweise kann in nicht tragenden Gehäuseteilen ein Material geringer Festigkeit und geringerer Dichte eingesetzt werden. Auch eine Verwendung unterschiedlicher Fertigungsmethoden für die beiden Gehäuse ist denkbar. Zusätzlich kann bei der Materialwahl unterschiedlichen elektrischen Anforderungen, wie beispielsweise einer elektromagnetische Verträglichkeit, Isolation oder Abschirmung, Rechnung getragen werden.

Zwischen von dem ersten und zweiten Gehäuse begrenzten Innenräumen ist eine Wandung vorgesehen, welche den Stellmotor von dem Elektronikmodul trennt. Diese Wandung kann unterschiedliche Funktionen erfüllen: Die Wandung kann beispielsweise zu einer Abstützung des Stellmotors und/oder des Elektronikmoduls dienen, eine elektrische Isolation bereitstellen, einen Wärmetransport zwischen Stellmotor und Elektronikmodul verringern.

Vorzugweise handelt es sich bei dem Stellmotor um einen bürstenlosen Gleichstrommotor, welcher sich durch besonders gute Eigenschaften für den Betrieb eines Nockenwellenverstellers auszeichnet. Beispielsweise handelt es sich um einen dreiphasigen, insbesondere bipolar angesteuerten, Gleichstrommotor, wobei es erfindungsgemäß ermöglicht ist, dass als Walzenläufer ausgebildete Innenläufermotoren oder Scheibenläufermotoren zum Einsatz kommen. Grundsätzlich sind auch andere Motorbauarten, wie beispielsweise Außenläufermotoren oder bürstenlose Wechselstrommotoren oder auch zwei- oder vierphasige Motoren denkbar. Weiterhin ist es ebenfalls denkbar, dass die genannten Varianten auch bei einer unipolaren Ansteuerung der Motoren eingesetzt werden.

Für einen bevorzugten erfindungsgemäßen Nockenwellenversteller ist eine elektrische Verbindung zwischen dem Stellmotor und dem Elektronikmodul mit einer Befestigung des zweiten Gehäuses an dem ersten Gehäuse über eine Steckverbindung herstellbar. Eine derartige Verbindung kann automatisch im Zuge einer Annäherung des zweiten Gehäuses an das erste Gehäuse hergestellt werden. Hierbei können Befestigungsmittel des zweiten Gehäuses an dem ersten Gehäuse gleichermaßen einer Sicherung der hergestellten Steckverbindung dienen. Eine derartige Steckverbindung kann sowohl innerhalb der Gehäuse hergestellt werden, wobei in diesem Fall das Gehäuse gleicherma-βen eine Abdichtung der Steckverbindung gegenüber der Umgebung bereitstellt, oder außerhalb des Gehäuses erfolgen durch außen am Gehäuse angebrachte Stecker. Insbesondere ist ein Stecker unmittelbar in das Elektronikmodul integriert. Hierdurch können Kabelabgänge von dem Elektronikmodul vermieden werden. Vorzugsweise handelt es sich bei einem solchen in das Elektronikmodul integrierten Stecker um Steckerpins, welche über Stanzgitter unmittelbar mit der Platine verbunden sind. Die Anzahl derartiger Steckerpins richtet sich nach der Anzahl der gewünschten Funktionen und der zu übertragenden Daten (Stromversorgung, Diagnosefunktionen, usw.). Durch die automatisierte Verbindungsherstellung für die Steckverbindung über die Montage des Gehäuses kann weiterhin eine Fehlmontage zuverlässig vermieden werden. Weiterhin wird die Zahl der notwendigen Montageschritte verringert.

Für eine alternative oder zusätzliche Ausgestaltungsform des Nockenwellenverstellers erfolgt eine elektrische Anbindung des Stellmotors und/oder des Elektronikmoduls mit mindestens einer außerhalb des ersten Gehäuses und/oder des zweiten Gehäuses verlaufenden elektrischen Leitung. Eine derartige elektrische Leitung kann einerseits außerhalb des Gehäuses den Stellmotor und das Elektronikmodul elektrisch miteinander verbinden. Alternativ ist die externe Ansteuerung des Stellmotors und/oder des Elektronikmoduls, beispielsweise von einem externen Steuergerät auf diese Weise ermöglicht. Weiterhin kann über eine derartige elektrische Leitung ein Rückfluss von Betriebsdaten des Stellmotors und/oder des Elektronikmoduls erfolgen. Vorzugsweise ist an dem Elektronikmodul ein (Automotive-)Stecker angebracht. Ebenfalls ist es möglich, dass ein Kabelabgang mit Stecker an einem Steuergerät des Elektronikmoduls vorgesehen ist. Dies hat insbesondere den Vorteil, dass man einen derartigen Stecker direkt mit einem Gegenstecker eines zentralen Motorsteuergerätes Verbinden kann und kein zusätzlicher Kabelbaum zwischen einem zentralen Motorsteuergerät und dem elektrischen Nockenwellenversteller erforderlich ist.

Vorzugsweise ist das Elektronikmodul zumindest teilweise radial seitlich des Stellmotors angeordnet. Hierdurch kann radial seitlich des Stellmotors vorhandener Bauraum für das Elektronikmodul genutzt werden, wobei das Elektronikmodul dennoch benachbart zu dem Stellmotor positioniert werden kann, wodurch sich kurze elektrische Übertragungswege zwischen Stellmotor und Elektronikmodul ergeben.

Entsprechend einem weiteren Vorschlag der Erfindung ist bei dem Nockenwellenversteller ein zweiter Stellmotor vorgesehen. Dieser kann als zusätzlicher Antrieb im Zusammenhang mit derselben Nockenwelle vorgesehen sein oder aber als Stellmittel für eine zweite Nockenwelle derselben Brennkraftmaschine. Die beiden Stellmotoren können auf gleiche Weise oder unterschiedlich beaufschlag werden. Zwischen den beiden Stellmotoren ergibt sich ein Zwischenraum, welcher erfindungsgemäß genutzt werden kann, so dass sich eine kompakte Bauweise ergibt. Beispielsweise kann der Abstand der Stellmotoren durch den Abstand von zwei Nockenwellen vorgegeben sein. Bei vorgegebene radialer Baugröße der Stellmotoren ergibt sich der Zwischenraum aus diesen Größenverhältnissen. Weiterhin kann erfindungsgemäß eine unebene Stirnfläche durch Hervortreten von Bereichen der Stellmotoren vermieden werden, da der nicht genutzte Zwischenraum mit dem Elektronikmodul "gefüllt" wird, so dass sich eine mehr oder weniger ebene Frontfläche des Nockenwellenverstellers ergibt. Die Erfindung macht sich hierbei zu Nutze, dass eine Anordnung des Elektronikmoduls mit den einzelnen Bauteilen, beispielsweise auf einer Platine, verhältnismäßig flexibel ausgestaltet werden kann, so dass ein derartiges Elektronikmodul auch gekrümmten Außenflächen der Stellmotoren anpasst werden kann. Hierbei kann es sich bei dem zwischen den Stellmotoren angeordneten Elektronikmodul um ein solches zum Betrieb eines Stellmotors oder beider Stellmotoren handeln.

Entsprechend einer Weiterbildung der Erfindung weist das Elektronikmodul eine Platine mit elektronischen Bauteilen auf. Hierbei kann es sich um elektronische Bauteile des Leistungsteiles und/oder des Logikteiles insbesondere der Endstufe handeln mit Kondensatoren, Widerständen, Transistoren, MetallOxide-Semiconductor-Feldeffekttransistoren (Mosfets), die der Beschaltung von Motorphasen dienen, Endstufentreiber zur Schaltung der Mosfets, die allerdings auch in einen Kommutierungsbaustein integriert sein können, eine Kommutierungselektronik, die zur Bestimmung der zu bestromenden Phasen dient, Mikrocontroler, anwendungsspezifischen integrierten Schaltungen (A-SIC's), usw. Zum Einsatz kommen kann eine Standardplatine (FR4, FR5) oder eine Hybridlösung (beispielsweise ein Keramikträger mit Kupferleitbahnen). Mischlösungen sind ebenfalls denkbar, beispielsweise eine Kombination einer Platine mit Hybridbauteil und einem Folienschaltungsträger. Einige und alle der vorgenannten Bauteile können auch direkt auf einem Stanzgitter aufgebracht werden. Die elektronischen Bauteile können miteinander verdrahtet sein, als Surface-Mounted-Devices (SMD) oder als ungehäuste Chips (Bare-Die's) ausgeführt sein.

Vorzugsweise ist die Wandung Teil des ersten Gehäuses, wobei die Platine unmittelbar an der Wandung befestigt ist. Hierdurch ergibt sich eine starre Ankopplung der Platine an die Wandung und damit mittelbar an den Stellmotor. Die Wandung übernimmt somit, ggf. neben weiteren Funktionen, eine Haltefunktion für die Platine. In diesem Fall wird die Platine anschließend an deren Befestigung an der Wandung mit dem zweiten Gehäuse abgedeckt oder abgedichtet. Ggf. sind an dem zweiten Gehäuse weitere elektrische Bauteile angebracht.

Entsprechend einer weiteren erfindungsgemäßen Ausgestaltung des Nockenwellenverstellers sind mehrere Platinen parallel zu der Wandung hintereinanderliegend angeordnet und miteinander verschaltet. Dieses bietet sich insbesondere dann an, wenn das Elektronikmodul parallel zu der Wandung eine kleine Fläche ausbilden soll. Ein beispielhafter Einsatzfall einer derartigen Ausgestaltung ist dann gegeben, wenn die Platinen in dem sich zwischen zwei Stellmotoren gebildeten Zwischenraum angeordnet werden sollen.

Vorzugsweise beinhaltet das Elektronikmodul Sensoren für Betriebszustände des Motors. Diese Sensoren sind insbesondere auf der den Bauteilen des Stellmotors zugewandten Seite des Elektronikmoduls angeordnet. Hierbei handelt es sich beispielsweise um Hall-Sensoren. Alternativ ist allerdings ebenfalls denkbar, dass Hall-Sensoren oder ähnliche Sensoren entfallen, so dass eine sensorlose Regelung erfolgt.

Weiterhin ist es erfindungsgemäß ermöglicht, dass in das Elektronikmodul Anschlüsse für die drei Phasen des Motors integriert sind. Diese Anschlüsse sind vorzugsweise ebenfalls auf der dem Stellmotor zugewandten Seite des Elektronikmoduls angeordnet. Hierdurch ergibt sich eine besonders gute und Platz sparende Anbindung zwischen Elektronikmodul und Stellmotor. Die Anschlüsse und insbesondere ebenfalls Anschlüssen für etwaige Hall-Sensoren, können auch mit der Platine verbunden sein.

Ein weiterer erfindungsgemäßer Nockenwellenversteller ist dadurch gekennzeichnet, dass zwischen Elektronikmodul und benachbarten Bauteilen eine Wärmeleitpaste oder ein Wärmeleitkissen vorgesehen ist. Bei den benachbarten Bauteilen handelt es sich vorzugsweise um an die Umgebung angrenzende Bauteile wie beispielsweise das zweite Gehäuse. In diesem Fall leitet die Wärmeleitpaste oder ein Wärmeleitkissen die Wärme des Elektronikmoduls an das zweite Gehäuse weiter oder an einen Deckel, welcher in diesem Fall als Wärmesenke wirkt, indem die Wärme von dem Gehäuse oder Deckel über Strahlung bzw. Konvektion abgeführt wird. Hierdurch kann der Wärmehaushalt des Elektronikmoduls und damit des Nockenwellenverstellers positiv beeinflusst werden.

Alternativ oder zusätzlich kann das Elektronikmodul eine Kühleinrichtung besitzen. Bei einer derartigen Kühleinrichtung handelt es sich um eine Kühlung, bei welcher das Elektronikmodul über geeignete Anschlüsse mit einem Kühlmedium wie Luft oder Wasser beaufschlagt wird. Alternativ oder zusätzlich kann die Kühleinrichtung Rippen aufweisen, welche über eine Vergrößerung von wirksamen Außenflächen die Strahlung bzw. Konvektion vergrößern. Bei den genannten Anschlüssen handelt es sich um externe Anschlüsse für eine externe Versorgung mit einem Kühlmedium. Alternativ oder zusätzlich kann die Kühleinrichtung in einen ohnehin vorliegenden Kühlmittelkreislauf, beispielsweise des Zylinderkopfes, integriert sein. Ebenfalls möglich ist es, dass zur Kühlung ein Ventilator eingesetzt wird, welcher über einen Volumenstrom die abgeführte Wärme regeln kann. Die Kühleinrichtung des Elektronikmoduls kann hierbei separat von einer etwaigen weiteren Kühlung des Stellmotors oder integral mit dieser ausgebildet sein.

Für eine weitere Ausgestaltungsform des Nockenwellenverstellers bildet das erste Gehäuse mit dem Stellmotor eine Baueinheit, die an einem Gehäuse des Nockenwellenverstellers befestigbar ist. Das erste Gehäuse ist damit mit dem Stellmotor in einem ersten Montageschritt mit dem Nockenwellenversteller verbindbar. In einem anschließenden Montageschritt kann das zweite Gehäuse mit dem Elektronikmodul, welche eine weitere separate Baueinheit bilden, an dem ersten Gehäuse befestigt werden. Eine separate Demontage des zweiten Gehäuses ist damit ebenfalls möglich. An dem ersten Gehäuse können geeignete Schnittstellen für das zweite Gehäuse bzw. das Elektronikmodul vorgesehen werden. Erfindungsgemäß ist ein einfacher Austausch eines Elektronikmoduls ermöglicht. Weiterhin ist es möglich, dass mehrere Nockenwellenversteller mit gleichen oder unterschiedlichen Stellmotoren und/oder gleichen oder unterschiedlichen Elektronikmodulen kombiniert werden oder kombiniert werden können, wodurch sich bei einer Minimierung des Fertigungsaufwandes die Variantenvielfalt vergrößert.

Der Nockenwellenversteller, ggf. mit den Gehäusen und dem Stellmotor sowie dem Elektronikmodul, kann innerhalb eines Zylinderkopfgehäuses angeordnet sein. Alternativ kann das Gehäuse des Nockenwellenverstellers von außen an einem Zylinderkopfgehäuse befestigt werden.

Eine noch kompaktere Bauweise ergibt sich, wenn in die Baueinheit mit ersten Gehäuse und dem Stellmotor Zylinderkopffunktionen integriert sind. Bei derartigen Zylinderkopffunktionen handelt es sich beispielsweise um einen Wasserpumpenanschluss, eine Kettenspanneraufnahme, eine Nockenwellen-Sensoraufnahme, eine Zentrierung des Elektronikmoduls zur Nockenwellen-Aufnahmebohrung, beispielsweise über einen Bund oder eine Zentrierhülse oder ähnliches. Eine multifunktionale Nutzung der Wandung ergibt sich, wenn diese von dem zweiten Gehäuse gebildet ist und - neben den vorgenannten Funktionen - ein Lager für eine Stellwelle des Stellmotors aufnimmt.

Gemäß einer weiteren Ausgestaltung der Erfindung ist das Elektronikmodul mit einer Ummantelung umgossen oder umspritzt. Eine derartige Ummantelung stellt eine besonders einfache, aber effektive Dichtung bereit, welche das Elektronikmodul auch bei einem teilweisen Ausfall weiterer Dichtelemente oder Schäden eines Gehäuses schützen kann. Hierdurch kann auch in Extremsituationen die elektrische Funktionsfähigkeit gesichert werden. Weiterhin kann eine Ummantelung eine zusätzliche elektrische Isolation zwischen einzelnen Bauteilen des Elektronikmoduls und/oder benachbarten elektrischen Bauteilen gewährleisten. Zusätzlich kann die Ummantelung einen mechanischen Schutz des Elektronikmoduls bereitstellen. Ebenfalls kann über die Ummantelung eine Abstützung gegenüber benachbarten Bauteilen erfolgen. Derartige mechanische Schutzfunktionen sind insbesondere in Folge von auftretenden Vibrationen der Brennkraftmaschine hilfreich.

### Kurze Beschreibung der Zeichnungen

Weitere Merkmale der Erfindung ergeben sich aus der folgenden Beschreibung und den zugehörigen Zeichnungen, in denen Ausführungsbeispiele der Erfindung schematisch dargestellt sind. Es zeigen:
- Figur 1: einen Stellmotor in einem ersten Gehäuse und ein den Stellmotor beaufschlagendes Elektronikmodul in einem zweiten Gehäuse im Längsschnitt;
- Figur 2: ein erstes Gehäuse für zwei elektrische Stellmotoren und ein oder zwei Elektronikmodule bei Blickrichtung in Richtung einer Brennkraftmaschine;
- Figur 3: ein ersten Gehäuse mit Stellmotor und mit montiertem zweitem Gehäuse in Seitenansicht;
- Figur 4: ein Elektronikmodul bei geöffnetem Deckel des zweiten Gehäuses;
- Figur 5: einen Deckel für ein zweites Gehäuse gemäß Figur 4;
- Figur 6: einen elektrischen Stellmotor mit einem ersten Gehäuse und einem zweitem Gehäuse gemäß einer zweiten Ausführungsform der Erfindung in Seitenansicht;
- Figur 7: ein erstes Gehäuse für zwei Stellmotoren;
- Figur 8: einen elektrischen Stellmotor mit erstem Gehäuse und zweitem Gehäuse gemäß einer weiteren Ausführungsform der Erfindung in Seitenansicht;
- Figur 9: ein Elektronikmodul bei geöffnetem Deckel für eine weitere Ausführungsform, bei der das Elektronikmodul zwischen zwei Stellmotoren angeordnet werden kann;
- Figur 10: ein Deckel für das Elektronikmodul gemäß Figur 9;
- Figur 11: ein erstes Gehäuse und zweites Gehäuse mit integrierter (Wasser-) Kühlung bei Blickrichtung in Richtung einer Brennkraftmaschine;
- Figur 12: struktureller Aufbau eines elektrischen Systems für einen bürstenlosen Gleichstrommotor;
- Figur 13: eine weitere Ausführungsform mit einem Stellmotor in einem ersten Gehäuse und ein den Stellmotor beaufschlagendes Elektronikmodul in einem zweiten Gehäuse im Längsschnitt, wobei das erste und zweite Gehäuse mit einem integralen Bauteil gebildet sind.

### Ausführliche Beschreibung der Erfindung

Die Erfindung findet Einsatz für einen Nockenwellenversteller beliebiger Bauart, bei welchem eine Verstellung der Winkelbeziehung zwischen einem Antriebselement (Antriebszahnrad) und einer Nockenwelle nach Maßgabe der Verdrehung einer Stellwelle 10 erfolgt. In den Figuren sind in Folge der Austauschbarkeit des grundsätzlichen Mechanismus des Nockenwellenverstellers das Antriebselement, die Nockenwelle und ein zwischengeschalteter Übertragungsmechanismus des Nockenwellenverstellers nicht dargestellt.

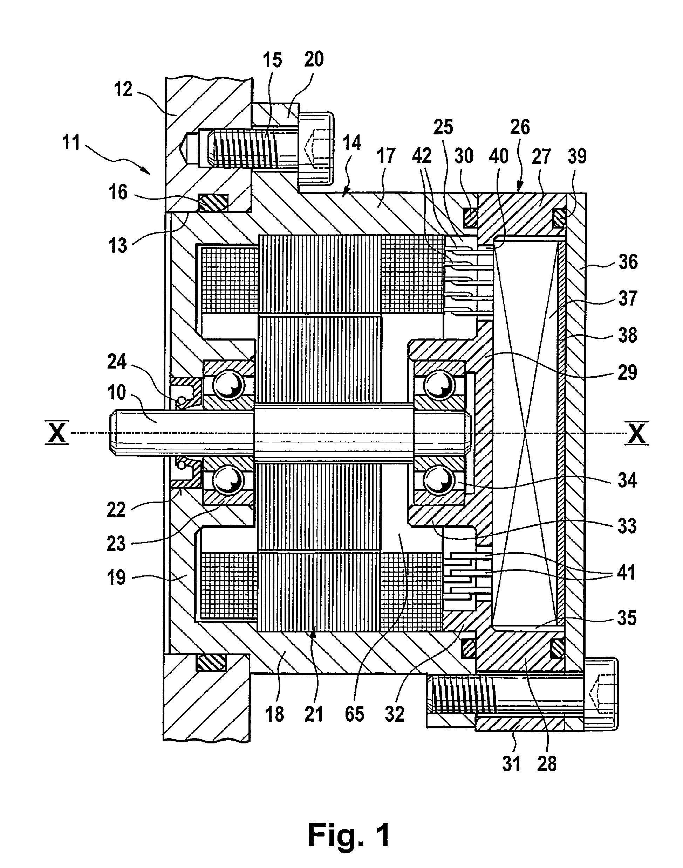

Ein Nockenwellenversteller 11 oder ein den Nockenwellenversteller haltender Zylinderkopf besitzt ein Gehäuse 12, welches eine Durchbrechung 13, hier eine Durchgangsbohrung, besitzt. In die Durchbrechung 13 ist von au-βen passgenau ein erstes Gehäuse 14 eingesetzt und über Schrauben 15 mit dem Gehäuse 12 verschraubt. Zwischen das Gehäuse 12 und das erste Gehäuse 14 ist ein Dichtelement 16 zwischengeschaltet. In dem in Fig. 1 dargestellten Ausführungsbeispiel ist das Dichtelement 16 als Dichtring ausgebildet, welcher in einer radialen Nut der Durchbrechung 13 Aufnahme findet.

Das erste Gehäuse 14 ist im Längsschnitt im Wesentlichen U-förmig ausgebildet mit zwei parallelen Seitenschenkeln 17, 18 und einem die Endbereiche der Seitenschenkel verbindenden Grundschenkel 19. Auf ihrer. Umfangsfläche tragen die Seitenschenkel 17, 18 einen Flansch 20 zur Anbindung des ersten Gehäuses 14 an das Gehäuse 12 über die Schrauben 15. In dem durch die Seitenschenkel 17, 18 und den Grundschenkel 19 begrenzten Innenraum 65 des ersten Gehäuses 14 befindet sich ein elektrischer Stellmotor 21 mit einem Rotor, der in Antriebsverbindung mit der Stellwelle 10 steht, sowie einem Stator, welcher gegenüber dem ersten Gehäuse 14 abgestützt ist. In den dargestellten Ausführungsbeispielen handelt es sich bei dem elektrischen Stellmotor um einen bürstenlosen Gleichstrommotor. Stellwelle 10 und Stellmotor 21 sind im Wesentlichen koaxial zu einer Längsachse X-X angeordnet.

Der Grundschenkel 19 verfügt mittig über eine Lagerbohrung 22, durch welche die Stellwelle 10 vom Innenraum 65 des ersten Gehäuses 14 in Richtung des Getriebes des Nockenwellenverstellers 11 heraustritt. Im Bereich der Lagerbohrung 22 ist die Stellwelle 10 über ein Wälzlager 23, hier ein Kugellager, gegenüber dem ersten Gehäuse 14 abgestützt. Dem Wälzlager 23 ist in Richtung der Brennkraftmaschine ein Dichtelement 24 vorgelagert, welches den Innenraum 65 des ersten Gehäuses 14 nach Außen und/oder nach Innen abdichtet. Bei dem in Fig. 1 dargestellten Ausführungsbeispiel handelt es sich bei dem Dichtelement 24 um einen Radialwellendichtring, welcher zwischen der Innenfläche der Lagerbohrung 22 und der Mantelfläche der Stellwelle 10 wirkt.

Das erste Gehäuse 14 ist somit ungefähr "topfartig" ausgebildet mit einer kreisförmigen Öffnung 25, welche dem Grundschenkel 19 gegenüberliegt. Die Öffnung 25 ist zumindest teilweise verschlossen von einem zweiten Gehäuse 26.

Das zweite Gehäuse 26 ist im dargestellten Längsschnitt im Wesentlichen U-förmig ausgebildet mit zwei parallelen Seitenschenkeln 27, 28 und einer in Form eines Grundschenkels 29 ausgebildeten Wandung. Der Grundschenkel 29 ist im Querschnitt korrespondierend zum ersten Gehäuse 14 ausgebildet und verschließt zumindest teilweise die Öffnung 25. Im Kontaktbereich des Grundschenkels 29 mit den Endbereichen der Seitenschenkel 17, 18 des ersten Gehäuses 14 ist zwischen das erste Gehäuse 14 und das zweite Gehäuse 26 ein Dichtelement 30 zwischengeschaltet. Bei dem in Fig. 1 dargestellten Ausführungsbeispiel handelt es sich bei dem Dichtelement 30 um einen Dichtring, welcher Aufnahme findet in eine umlaufende Nut des ersten Gehäuses. Die Seitenschenkel 17, 18 sowie 27, 28 besitzen im Kontaktbereich radiale Fortsätze oder einen Flansch 31, im Bereich dessen das erste Gehäuse 14 und das zweite Gehäuse 26 miteinander verschraubt sind. Von dem Grundschenkel 29 erstreckt sich in Richtung des Inneren des ersten Gehäuses 14 ein Zentrieransatz 32 des zweiten Gehäuses 26, an welchem die Seitenschenkel 17, 18 zur exakten Ausrichtung der Gehäuse 14, 26 zueinander unter Ausbildung einer Passung anliegen.

Der Grundschenkel 29 trägt mittig eine kreisringförmige Buchse 33, welche sich von dem Grundschenkel 29 in Richtung des Innenraumes 65 des ersten Gehäuses 14 erstreckt. Die Buchse 33 stützt radial innenliegend ein Wälzlager 34, hier ein Kugellager, ab, welches auf der dem Wälzlager 23 abgewandten Seite des elektrischen Stellmotors 21 die Stellwelle 10 lagert. Somit ist die Stellwelle 10 mit dem hiermit verbundenen Rotor im Wälzlager 23 gegenüber dem ersten Gehäuse 14 gelagert sowie in dem Wälzlager 34 gegenüber dem zweiten Gehäuse 26.

Ein von den Seitenschenkeln 27, 28 und Grundschenkel 29 begrenzter Innenraum 35 ist verschlossen unter Verwendung eines Deckels 36. In den Innenraum 35 ist ein Elektronikmodul 37 eingepasst. Zwischen Elektronikmodul 37 und Deckel 36 befindet sich weiterhin im Innenraum 35 eine Wärmeleitpaste oder ein Wärmeleitkissen 38, welches großflächig, insbesondere unter Ausbildung einer Anpresskraft, an dem Deckel 36 sowie dem Elektronikmodul 37 anliegt. Zwischen Deckel 36 und die Stirnflächen der Seitenschenkel 27, 28 ist ein Dichteelement 39 zwischengeschaltet. Gemäß Fig. 1 handelt es sich bei dem Dichteelement 39 um einen Dichtring, welcher in eine axiale Nut des zweiten Gehäuses 26 eingesetzt ist.

Für das in Fig. 1 dargestellte Ausführungsbeispiel besitzt der Grundschenkel 29 des zweiten Gehäuses über den Umfang verteilte Durchbrechungen 40. Durch die Durchbrechungen 40 treten Stecker 41 des Elektronikmoduls 37 hindurch. Der elektrische Stellmotor 21 verfügt in den korrespondierenden Bereichen über korrespondierend ausgebildete Steckeraufnahmen 42. Mit einem Einsetzen des zweiten Gehäuses 26 mit Elektronikmodul 37 und Steckern 41 wird automatisiert eine elektrische Verbindung zwischen Stecker 41 und Steckeraufnahme 42 hergestellt, wobei die exakte Ausrichtung der Stecker 41 und Steckeraufnahme 42 ebenfalls über den Zentrieransatz 42 und die entsprechenden inneren Abmessungen des ersten Gehäuses 14 gewährleistet werden kann.

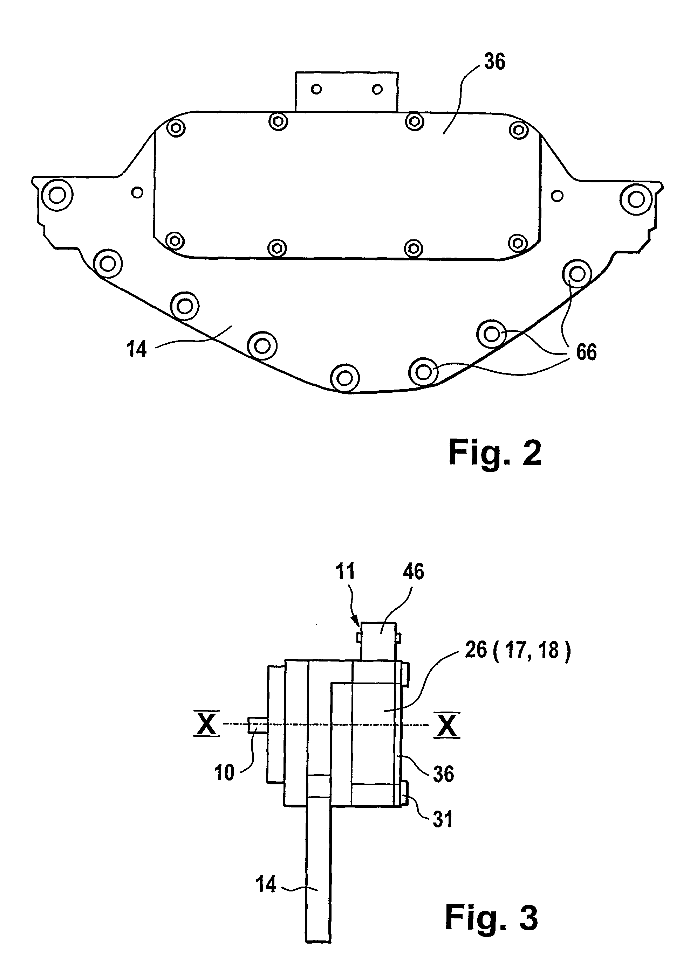

Fig. 2 zeigt den Deckel 36 des zweiten Gehäuses 26 und ein erstes Gehäuse 14 bei Blickrichtung in Richtung der Achse X-X in Richtung einer Brennkraftmaschine. Das erste Gehäuse 14 kann über mehrere Bohrungen 66 mit einem Gehäuse des Nockenwellenverstellers 11 oder aber einem Zylinderkopf verschraubt werden.

Fig. 3 zeigt eine ungeschnittene Seitenansicht des erfindungsgemäßen Nockenwellenverstellers 11.

Gemäß Fig. 2 sind in dem ersten und zweiten Gehäuse 14, 26 zwei elektrische Stellmotoren nebeneinander angeordnet, so dass der Deckel 36 und die Gehäuse 14, 26 länglich, insbesondere ungefähr rechteckförmig, ausgebildet ist.

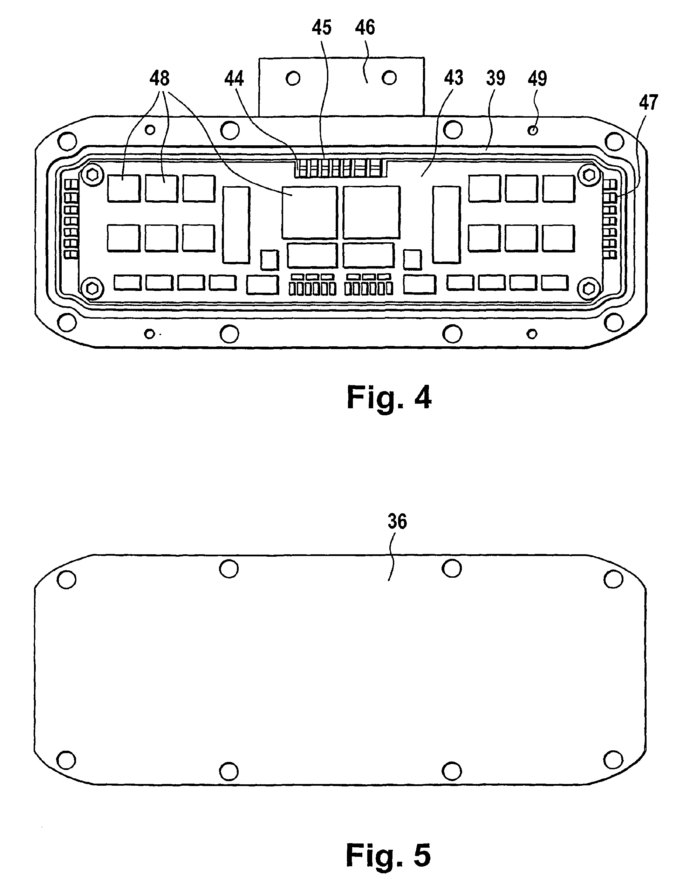

Fig. 4 zeigt das Elektronikmodul 37 in gegenüber Fig. 1 detaillierter Darstellung bei Blickrichtung in Richtung der Achse X-X und geöffnetem Deckel 36 (vgl. Figur 5). Das Elektronikmodul 37 weist eine Platine 43 auf, die im Bereich von Aufnahmen 44 mit dem Einbringen der Platine 43 in das zweite Gehäuse 26 in elektrische Verbindung mit Steckern 45 tritt, welche wiederum elektrisch verbunden sind mit einem außerhalb des zweiten Gehäuses 26 angeordneten Stecker 46. Über den Stecker 46 kann das Elektronikmodul 37 mit weiteren externen elektrischen Einrichtungen verbunden werden.

Die Platine 43 besitzt weiterhin Stecker oder Verbindungen 47 für die Anbindung von Anschlüssen des Motors oder von Hall-Sensoren. Die Platine 43 trägt eine Vielzahl von elektrischen Bauelementen 48. Das zweite Gehäuse 26 kann über Zentrierbohrungen 49 verfügen, welche alternativ oder zusätzlich für eine Zentrierung ein Einclipsen des Deckels 36 ermöglichen.

Bei den elektrischen Bauelementen 48 handelt es sich insbesondere um solche eines Leistungsteiles und/oder eines Logikteiles einer Endstufe, Kondensatoren, Widerstände, Transistoren, Mikrocontroler, ASIC's, usw. Die Stecker 45, 46 und Verbindungen 47 sind über Einstanzgitter mit der Platine 43 verbunden. Die Anzahl der Stecker 45, 46 und Verbindungen 47 richtet sich nach der Anzahl der gewünschten Funktionen und der zu übertragenden Daten (Stromversorgung, Diagnosefunktionen usw.). Des Weiteren ist es vorteilhaft, wenn in das Elektronikmodul 37 auf der den Motorbauteilen zugewandten Seite Sensorik wie Hallsensoren des elektrischen Stellmotors 21 integriert sind. Weiterhin können Anschlüsse 50 für die drei Phasen des elektrischen Stellmotors 21 integriert sein.

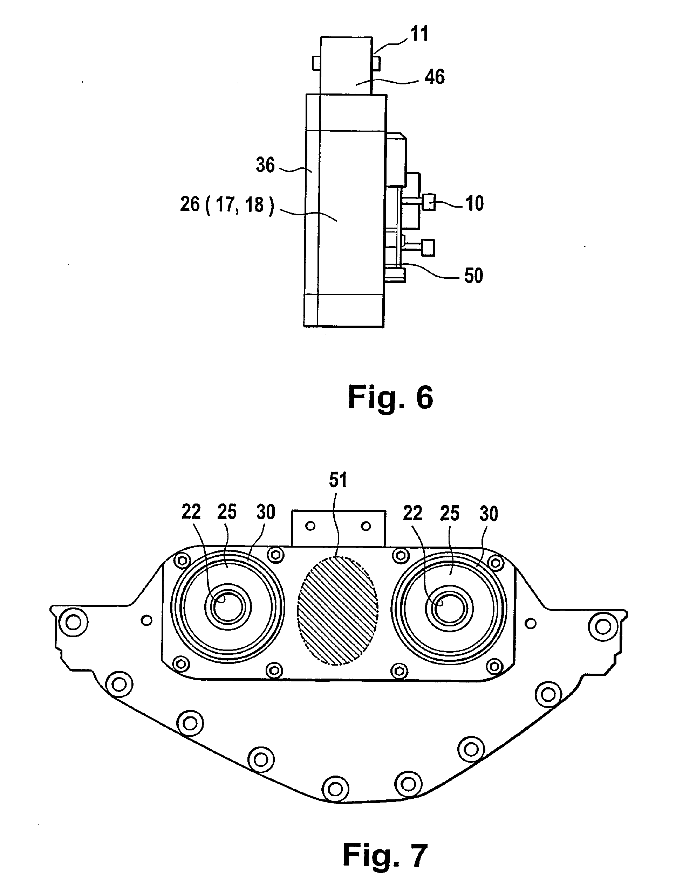

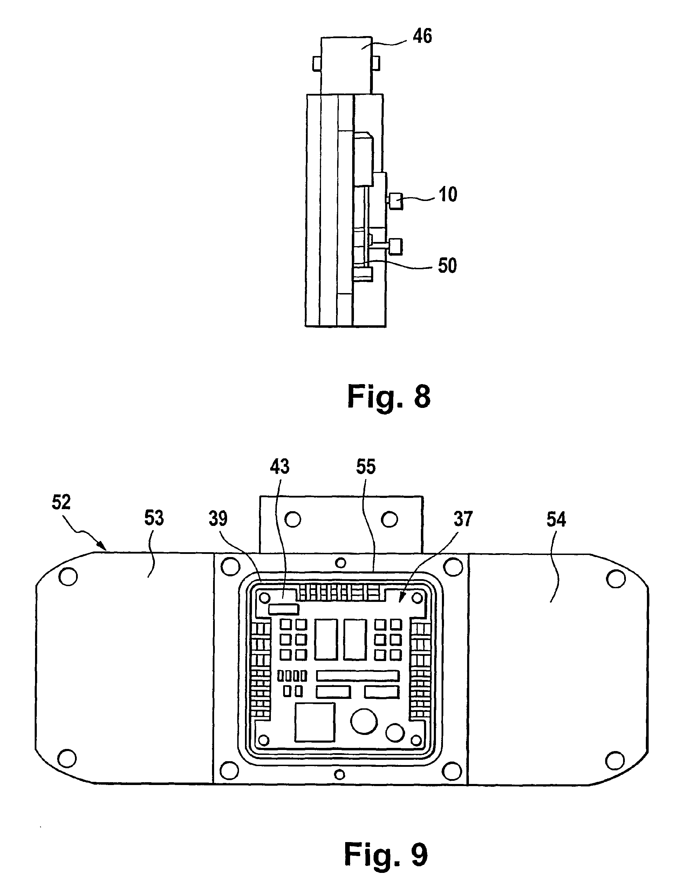

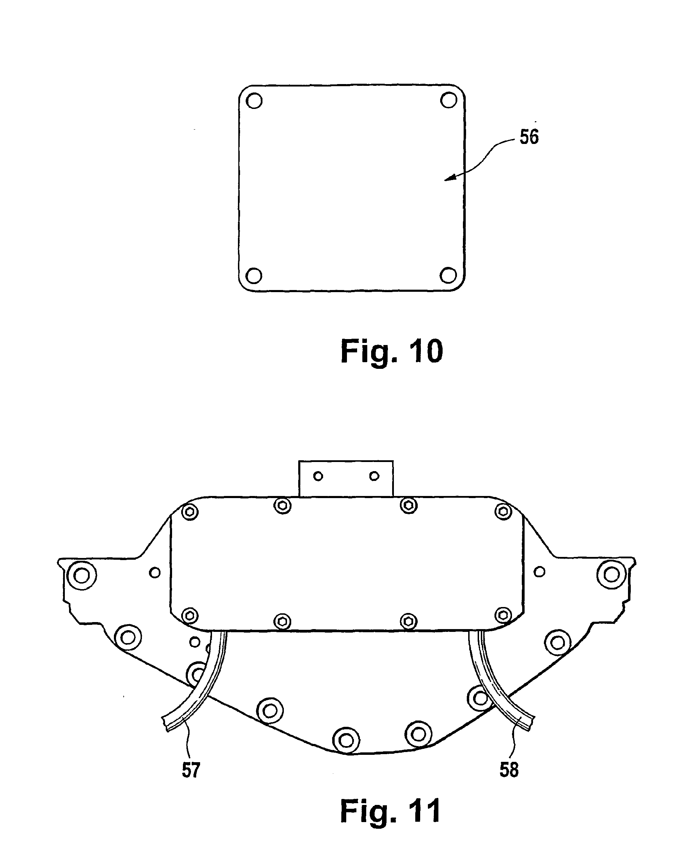

Figur 7 zeigt das erste Gehäuse 14 bei Blickrichtung in Richtung der Achse X-X ohne das zweite Gehäuse 26 und ohne elektrischen Stellmotor 21. Wie aus Fig. 7 ersichtlich ergibt sich zwischen den beiden Ausnehmungen für die beiden elektrischen Stellmotoren 21 ein Zwischenraum 51, welcher ungenutzt ist. Für die in den Fig. 8 und 9 dargestellte abweichende Ausbildung des Elektronikmoduls 37 und des zweiten Gehäuses 26 kann der Zwischenraum 51 genutzt werden, indem in diesen das Elektronikmodul 37 und das zweite Gehäuse 26 eintritt. In diesem Fall besitzt das zweite Gehäuse 26 einen ungefähr rechteckförmigen Deckel 52, welcher in den außen liegenden Bereichen 53, 54 jeweils den Innenraum 65 des ersten Gehäuses 14 für einen elektrischen Stellmotor 21 verschließt. Zwischen den Bereichen 53, 54 tritt gegenüber diesen eine Kammer 55 des zweiten Gehäuses 26 hervor, welche in den Zwischenraum 51 eintritt und vorzugsweise im Bereich einer Stirnfläche zur Anlage an das erste Gehäuse 14 kommt oder geringfügig von diesem beabstandet ist. Die Kammer 55 beinhaltet in das Elektronikmodul 37. Die Platine 43 ist in diesem Fall nicht einstückig, sondern mehrstückig ausgebildet, wobei einzelne Teile der Platine 43 parallel zur Zeichenebene gemäß Fig. 9 hintereinander liegend angeordnet sind. Die Kammer 55 kann mittels des in Fig. 10 dargestellten Deckels 56 verschlossen sein.

Gemäß Fig. 11 kann das erste Gehäuse 14 und/oder das zweite Gehäuse 26 über Anschlüsse 57, 58 verfügen, über welche die Innenräume 35, 65 des ersten Gehäuses 14 und des zweiten Gehäuses 16 sowie der elektrische Stellmotor 21 und das Elektronikmodul 37 mit einem Kühlmittel, insbesondere Luft oder Wasser, beaufschlagt werden können.

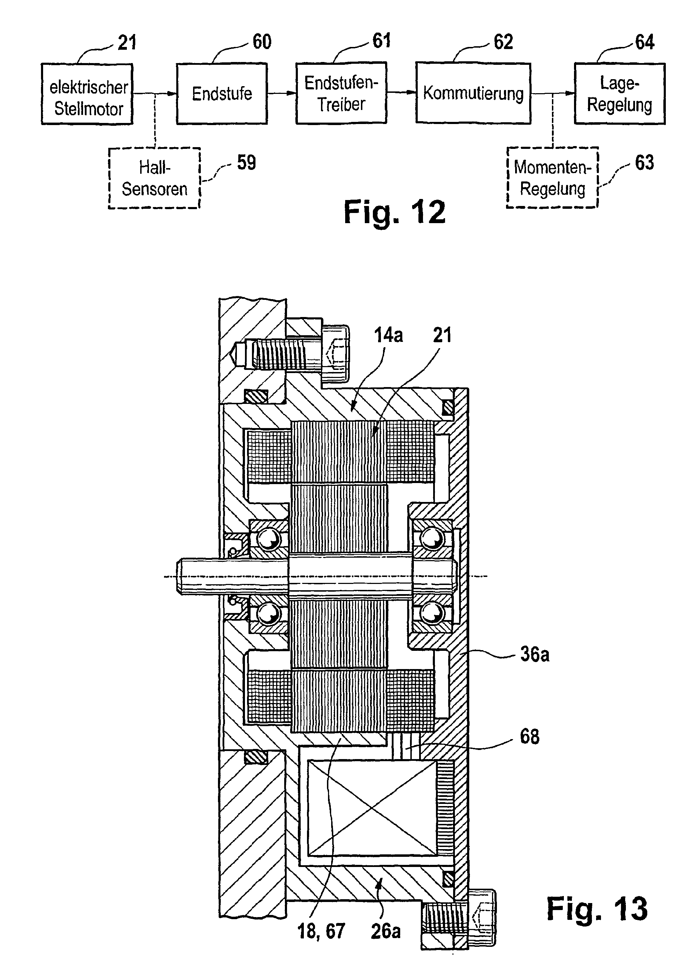

Figur 12 zeigt einen grundsätzlichen Aufbau von einem elektrischen Stellmotor 21 mit Elektronikmodul 37: Der elektrische Stellmotor 21, ggf. eine Motorsensorik wie Hall-Sensoren 59, eine Endstufe (Transistoren) 60, ein Endstufentreiber 61, eine Kommutierung 62, ggf. eine Drehzahlregelung, Strom-oder Momentenregelung 63 und eine Lageregelung 64 stehen wie skizziert in elektrischer Verbindung bzw. Signalverbindung. Sämtliche oder Teile der vorgenannten Bauteile können dabei in das Elektronikmodul 37 integriert sein.

Vorzugsweise ist in das Elektronikmodul 37 ein Steuergerät integriert, so dass eine Ansteuerung bzw. Regelung nicht dezentral, beispielsweise über ein Fahrzeug-Steuergerät erfolgt, sondern der Nockenwellenversteller 11 (unter Umständen bis auf die Spannungsversorgung) eine autarke Einheit darstellt. Hierdurch kann ein Verkabelungsaufwand (beispielsweise ein Kabel mit einem Stecker) von dem Fahrzeug-Steuergerät zu einem Steuergerät des bürstenlosen Gleichstrom-Motors und Kabel mit Stecker vom Steuergerät des bürstenlosen Gleichstrom-Motors zum bürstenlosen GleichstromMotor eingespart werden. In Folge der eingesparten Verkabelungen können elektrische Verluste und EMV-Probleme vermieden werden bzw. ein erhöhter Aufwand für eine Abschirmung etwaiger Verkabelungen kann entfallen. Hierdurch können Kosten minimiert werden.

Das erste Gehäuse 14 und/oder das zweite Gehäuse 26 können aus Stahl, Aluminium, Kunststoff oder anderen möglichen Werkstoffen hergestellt sein. Die Platine 43 kann mit dem ersten Gehäuse 14, dem Grundschenkel 29 des zweiten Gehäuses 26 oder an einem Seitenschenkel 27, 28 des zweiten Gehäuses befestigt sein, beispielsweise mit diesen verschraubt sein oder stoffflüssig mit diesen verbunden sein. Alternativ kann zwischen die vorgenannten Bauteile und die Platine 43 eine Schaltungsträgeraufnahme zwischengeschaltet sein.

Vorzugsweise sind sowohl ein Leistungsteil als auch ein Logikteil in das Elektronikmodul 37 integriert, wobei aber auch Lösungen denkbar sind, bei denen nur das Leistungsteil am elektrischen Stellmotor 21 angebracht ist. Der Logikteil ist dann wiederum in ein separates Steuergerät oder idealerweise in das vorhandene Steuergerät zu integrieren. Soll lediglich ein Stellmotor 21 eingesetzt werden, dann kann das zweite Gehäuse 26 mit dem Elektronikmodul 37 axial auf den Stellmotor 21, aber auch seitlich versetzt zu diesem angeordnet werden oder aber sich im ersten Gehäuse 14 befinden. Die ideale Anordnung hängt von der jeweiligen Anwendung ab und muss individuell gewählt werden.

Vorteilhaft werden in das erste Gehäuse verschiedene Zylinderkopffunktionen integriert, wie beispielsweise ein Wasserpumpenanschluss, eine Kettenspanneraufnahme, eine Nockenwellen-Sensoraufnahme, ein Zentriermodul zur Nockenwellen-Aufnahmebohrung (z.B. Bund, Zentrierhülsen, usw.).

Bei Einsatz von zwei oder mehr Stellmotoren ist es denkbar, die Elektronik in einem Elektronikmodul 37 wie dargestellt anzuordnen mit dem alle elektrischen Stellmotoren 21 angesprochen werden können. Alternativ ist es ebenfalls möglich, dass jeder elektrische Stellmotor 21 mit mindestens einer eigenen Elektronikeinheit und einem eigenen ein- oder mehrteiligen Elektronikmodul 37 ausgerüstet ist.

Vorteilhaft werden nur bestimmte Blöcke in das erste Gehäuse 14 bzw. das zweite Gehäuse 26 integriert, beispielsweise abhängig von einer Temperaturbeständigkeit oder einer Vibrationsfestigkeit des Bauteiles, während andere Blöcke, welche weniger beständig sind, in einem separaten Steuergerät oder in dem Fahrzeug-Steuergerät integriert sind. Hierbei wird vorteilhaft die Endstufe, in der beispielsweise die Transistoren direkt auf ein Stanzgitter anstatt auf eine Platine gefügt werden, in das erste Gehäuse 14 oder das zweite Gehäuse 26 integriert und die Kommutierungs- und Regelungselektronik wird in einem separaten, externen Steuergerät oder in dem Fahrzeug-Steuergerät angeordnet. Alternativ ist es ebenfalls denkbar, dass Endstufe, Kommutierung und Regelungen komplett im ersten Gehäuse 14 oder zweiten Gehäuse 26 oder komplett in einem Fahrzeug-Steuergerät oder komplett in einem separaten Steuergerät angeordnet werden.

Eine besonders gute Wärmeabführung ist dann gegeben, wenn der Deckel 36 aus einem gut wärmeleitenden Material wie beispielsweise Aluminium oder Stahl hergestellt ist. Um zu verhindern, dass das Elektronikmodul 37 durch den heißen Zylinderkopf erwärmt wird, ist es vorteilhaft, dass die Elektronik, insbesondere das Elektronikmodul 37, mittels eines Isolators gegenüber dem Zylinderkopf abgeschirmt ist. Alternativ kann dies dadurch erfolgen, dass das Elektronikmodul 37 zumindest teilweise aus Kunststoff hergestellt ist oder dass das zweite Gehäuse 26 aus Kunststoff hergestellt ist. Hierdurch wird verhindert, dass Wärme vom Zylinderkopf über das erste Gehäuse 14 und/oder das zweite Gehäuse 26 zum Elektronikmodul 37 transportiert wird. Alternativ kann auch zwischen Elektronikmodul 37, erstes Gehäuse 14 und zweites Gehäuse 26 eine Isolationsschicht, beispielsweise ein Isolationszwischenlager aus Kunststoff, zwischengeschaltet werden. In diesem Fall kann das Elektronikmodul oder eines der Gehäuse 14, 26 aus Metall hergestellt werden. Schließlich ist es ebenfalls denkbar, dass sich eine Isolationsschicht zwischen erstem Gehäuse 14, zweitem Gehäuse 26 und Zylinderkopf befindet.

Sämtliche Bauteile können über Kühlmittelkreisläufe oder andere Kühlmechanismen gekühlt werden, beispielsweise über Kühlrippen am Elektronikmodul 37, am Deckel 36, am ersten Gehäuse 14 und/oder am zweiten Gehäuse 26. Es kann ein Ventilator zum Einsatz kommen oder eine Nutzung eines Kühlmittelstromes eines vorhandenen Kühlmittelkreislaufes des Fahrzeuges eingesetzt werden.

Des Weiteren ist es vorteilhaft, wenn die Elektronikbauteile vor eindringenden Fluiden wie Wasser, Öl, Säure oder ähnlichem geschützt werden. Hierzu finden die genannten Dichtelemente 30, 39, 16 Einsatz, bei welchen es sich um beliebige Dichtelemente wie Radialwellendichtringe, O-Ringe oder Formdichtungen handeln kann. Zusätzlichen Schutz gegen derartige Fluide bringt ein Vergießen der Bauteile oder des Elektronikmoduls 37, da so auch bei Ausfall einer Dichtung die Bauteile oder das Elektronikmodul 37 vor eintretenden Fluiden geschützt wird. Des Weiteren ist es denkbar, die Bereiche, in denen die Kontakte des Elektronikmoduls 37 mit denen des elektrischen Stellmotors 21 verbunden werden (Durchführungen der Kontakte auch das zweite Gehäuse 26) zu dichten, z.B. durch Vergießen der Kontakte oder durch eine Einzelkontaktabdichtung.

Figur 13 zeigt eine alternative Ausgestaltung der Erfindung, für die die beiden Gehäuse 14a und 26a nicht mit separaten Bauteilen gebildet sind, sondern mit einem gemeinsamen Bauteil. Das zweite Gehäuse 26a ist hierbei radial neben dem ersten Bauteil 14a und dem Stellmotor 21 angeordnet, beispielsweise unterhalb desselben. Die Gehäuse 14a und 26a besitzen eine gemeinsame begrenzende Wandung 67, welche sich im Übergangsbereich von dem ersten Gehäuse 14a zu dem zweiten Gehäuse 26a ergibt und die in dem in Figur 13 dargestellten Längsschnitt im Bereich des Seitenschenkels 18 gebildet ist. Die gemeinsame Wandung 67 besitzt eine radial orientierte Durchbrechung 68, welche auch als radial durchgehende, in axiale Richtung in die Wandung 67 eingebrachte Ausnehmung ausgebildet sein kann. Durch die Durchbrechung 68 treten elektrische Leitungen oder Stecker 41 und Steckeraufnahmen 42 hindurch, mittels welcher eine elektrische Kommunikation und Versorgung zwischen dem Stellmotor 21 und dem Elektronikmodul 37 erfolgt.

### Bezugszeichenliste

- 10: Stellwelle
- 11: Nockenwellenversteller
- 12: Gehäuse
- 13: Durchbrechung
- 14: erstes Gehäuse
- 15: Schrauben
- 16: Dichtelement
- 17: Seitenschenkel
- 18: Seitenschenkel
- 19: Grundschenkel
- 20: Flansch
- 21: elektrischer Stellmotor
- 22: Lagerbohrung
- 23: Wälzlager
- 24: Dichtelement
- 25: Öffnung
- 26: zweites Gehäuse
- 27: Seitenschenkel
- 28: Seitenschenkel
- 29: Grundschenkel
- 30: Dichtelement
- 31: Flansch
- 32: Zentrieransatz
- 33: Buchse
- 34: Wälzlager
- 35: Innenraum zweites Gehäuse
- 36: Deckel
- 37: Elektronikmodul
- 38: Wärmeleitkissen
- 39: Dichtelement
- 40: Durchbrechungen
- 41: Stecker
- 42: Steckeraufnahme
- 43: Platine
- 44: Aufnahmen
- 45: Stecker
- 46: Stecker
- 47: Verbindungen
- 48: Bauelemente
- 49: Zentrierbohrung
- 50: Anschlüsse
- 51: Zwischenraum
- 52: Deckel
- 53: Bereich
- 54: Bereich
- 55: Kammer
- 56: Deckel
- 57: Anschluss
- 58: Anschluss
- 59: Hall-Sensoren
- 60: Endstufe
- 61: Endstufentreiber
- 62: Kommutierung
- 63: Regelung
- 64: Lageregelung
- 65: Innenraum erstes Gehäuse
- 66: Bohrung
- 67: gemeinsame Wandung
- 68: Durchbrechung

## Patentansprüche

1. Nockenwellenversteller (11) mit einem in einem ersten Gehäuse (14) angeordneten elektrischen Stellmotor (21) und einem Elektronikmodul (37), welches einer elektrischen Beaufschlagung des Stellmotors (21) dient, **dadurch gekennzeichnet, dass** dem Elektronikmodul (37) ein zweites Gehäuse (26) zugeordnet ist, welches von außen an dem ersten Gehäuse (14) befestigt ist, wobei eine Wandung (29) des ersten Gehäuses (14) oder zweiten Gehäuses (26) den Stellmotor (21) von dem Elektronikmodul (37) trennt.

2. Nockenwellenversteller nach Anspruch 1, **dadurch gekennzeichnet, dass** der Stellmotor (21) ein bürstenloser Gleichstrommotor ist.

3. Nockenwellenversteller nach Anspruch 1 oder 2, **dadurch gekennzeichnet, dass** eine elektrische Verbindung zwischen dem Stellmotor (21) und dem Elektronikmodul (37) mit einer Befestigung des zweiten Gehäuses (26) an dem ersten Gehäuse (14) über eine Steckverbindung (41, 42) herstellbar ist.

4. Nockenwellenversteller nach Anspruch 1 oder 2, **dadurch gekennzeichnet, dass** eine elektrische Anbindung des Stellmotors (21) und/oder des Elektronikmoduls (37) mit mindestens einer außerhalb des ersten Gehäuses (14) und/oder des zweiten Gehäuses (26) verlaufenden elektrischen Leitung erfolgt.

5. Nockenwellenversteller nach einem der vorhergehenden Ansprüche, **dadurch gekennzeichnet, dass** das Elektronikmodul (37) und das zweite Gehäuse (26a) zumindest teilweise radial seitlich des Stellmotors (21) angeordnet sind.

6. Nockenwellenversteller nach Anspruch 5, **dadurch gekennzeichnet, dass** das erste Gehäuse (14a) und das zweite Gehäuse (26a) einstückig miteinander gebildet sind und mit einem gemeinsamen Deckel (36a) miteinander verschlossen sind.

7. Nockenwellenversteller nach einem der vorhergehenden Ansprüche, **dadurch gekennzeichnet, dass** ein zweiter Stellmotor vorgesehen ist und das Elektronikmodul (37) zumindest teilweise zwischen den beiden Stellmotoren angeordnet ist.

8. Nockenwellenversteller nach einem der vorhergehenden Ansprüche, **dadurch gekennzeichnet, dass** das Elektronikmodul (37) eine Platine (43) mit elektronischen Bauteilen (59, 60, 61, 62, 63 und/oder 64) aufweist.

9. Nockenwellenversteller nach Anspruch 7, **dadurch gekennzeichnet, dass** die Wandung Teil des ersten Gehäuses (14) ist und die Platine (43) unmittelbar an der Wandung befestigt ist.

10. Nockenwellenversteller nach Anspruch 7 oder 8, **dadurch gekennzeichnet, dass** mehrere Platinen (43) parallel zu der Wandung hintereinanderliegend angeordnet und miteinander verschaltet sind.

11. Nockenwellenversteller nach einem der vorhergehenden Ansprüche, **dadurch gekennzeichnet, dass** das Elektronikmodul (37) mindestens einen Sensor (Hallsensor 59) für Betriebszustände des Stellmotors (21) beinhaltet.

12. Nockenwellenversteller nach einem der vorhergehenden Ansprüche, **dadurch gekennzeichnet, dass** in das Elektronikmodul (37) Anschlüsse (50) für die drei Phasen des Stellmotors (21) integriert sind.

13. Nockenwellenversteller nach einem der vorhergehenden Ansprüche, **dadurch gekennzeichnet, dass** zwischen Elektronikmodul (37) und benachbarten Bauteilen eine Wärmeleitpaste oder ein Wärmeleitkissen (38) vorgesehen ist.

14. Nockenwellenversteller nach einem der vorhergehenden Ansprüche, **dadurch gekennzeichnet, dass** das Elektronikmodul (37) eine Kühleinrichtung aufweist.

15. Nockenwellenversteller nach einem der vorhergehenden Ansprüche, **dadurch gekennzeichnet, dass** das erste Gehäuse (14) mit dem Stellmotor (21) eine Baueinheit bildet, die an einem Gehäuse (12) des Nockenwellenverstellers (11) befestigbar ist, und das zweite Gehäuse (26) mit dem Elektronikmodul (37) eine weitere separate Baueinheit bildet, welche an dem ersten Gehäuse (14) befestigbar ist.

16. Nockenwellenversteller nach Anspruch 15, **dadurch gekennzeichnet, dass** das Gehäuse (12) des Nockenwellenverstellers (11) von außen an einem Zylinderkopfgehäuse befestigbar ist.

17. Nockenwellenversteller nach Anspruch 14, **dadurch gekennzeichnet, dass** in die Baueinheit mit dem ersten Gehäuse (14) und dem Stellmotor (21) Zylinderkopffunktionen integriert sind.

18. Nockenwellenversteller nach einem der vorhergehenden Ansprüche, **dadurch gekennzeichnet, dass** die Wandung von dem zweiten Gehäuse (26) gebildet ist und die Wandung ein Lager für eine Stellwelle (10) des Stellmotors (21) aufnimmt.

19. Nockenwellenversteller nach einem der vorhergehenden Ansprüche, **dadurch gekennzeichnet, dass** das Elektronikmodul (37) umgossen oder umspritzt ist.

20. Nockenwellenversteller nach einem der vorhergehenden Ansprüche, **dadurch gekennzeichnet, dass** das erste und/oder zweite Gehäuse (14, 26) über mindestens eine separate oder gemeinsame Kühleinrichtung verfügen.

## Claims

1. Camshaft adjuster (11) having an electric servomotor (21) arranged in a first housing (14), and an electronic module (37) which serves to apply electricity to the servomotor (21), **characterized in that** a second housing (26), which is attached to the outside of the first housing (14), is assigned to the electronic module (37), wherein a wall (29) of the first housing (14) or second housing (26) separates the servomotor (21) from the electronic module (37).

2. Camshaft adjuster according to Claim 1, **characterized in that** the servomotor (21) is a brushless direct current motor.

3. Camshaft adjuster according to Claim 1 or 2, **characterized in that** an electrical connection can be produced between the servomotor (21) and electronic module (37) with an attachment of the second housing (26) to the first housing (14) via a plug-type connection (41, 42).

4. Camshaft adjuster according to Claim 1 or 2, **characterized in that** an electrical connection of the servomotor (21) and/or of the electronic module (13) is implemented with at least one electrical line running outside the first housing (14) and/or the second housing (26).

5. Camshaft adjuster according to one of the preceding claims, **characterized in that** the electronic module (37) and second housing (26a) are arranged at least partially radially to the side of the servomotor (21).

6. Camshaft adjuster according to Claim 5, **characterized in that** the first housing (14a) and the second housing (26a) are integrally connected to one another and are locked to one another with a common lid (36a).

7. Camshaft adjuster according to one of the preceding claims, **characterized in that** a second servomotor is provided, and the electronic module (37) is arranged at least partially between the two servomotors.

8. Camshaft adjuster according to one of the preceding claims, **characterized in that** the electronic module (37) has a circuit board (43) with electronic components (59, 60, 61, 62, 63 and/or 64).

9. Camshaft adjuster according to Claim 7, **characterized in that** the wall is part of the first housing (14), and the circuit board (43) is directly attached to the wall.

10. Camshaft adjuster according to Claim 7 or 8, **characterized in that** a plurality of circuit boards (43) are arranged one behind the other parallel to the wall and are connected to one another.

11. Camshaft adjuster according to one of the preceding claims, **characterized in that** the electronic module (37) contains at least one sensor (Hall sensor 59) for operating states of the servomotor (21).

12. Camshaft adjuster according to one of the preceding claims, **characterized in that** terminals (50) for the three phases of the servomotor (21) are integrated into the electronic module (37).

13. Camshaft adjuster according to one of the preceding claims, **characterized in that** a heat-conducting paste or a heat-conducting cushion (38) is provided between the electronic module (37) and adjacent components.

14. Camshaft adjuster according to one of the preceding claims, **characterized in that** the electronic module (37) has a cooling device.

15. Camshaft adjuster according to one of the preceding claims, **characterized in that** the first housing (14) forms a structural unit with the servomotor (21), which structural unit can be attached to a housing (12) of the camshaft adjuster (11), and the second housing (26) forms a further separate structural unit with the electronic module (37), which further separate structural unit can be attached to the first housing (14).

16. Camshaft adjuster according to Claim 15, **characterized in that** the housing (12) of the camshaft adjuster (11) can be attached to the outside of a cylinder head casing.

17. Camshaft adjuster according to Claim 14, **characterized in that** cylinder head functions are integrated into the structural unit with the first housing (14) and servomotor (21).

18. Camshaft adjuster according to one of the preceding claims, **characterized in that** the wall is formed by the second housing (26), and the wall accommodates a bearing for a regulating shaft (10) of the servomotor (21).

19. Camshaft adjuster according to one of the preceding claims, **characterized in that** the electronic module (37) is encapsulated by casting or injection moulding.

20. Camshaft adjuster according to one of the preceding claims, **characterized in that** the first and/or second housing (14, 26) have/has at least one separate or common cooling device.

## Revendications

1. Dispositif de réglage d'arbre à cames (11) équipé d'un moteur de réglage (21) électrique disposé dans un premier carter (14) et d'un module électronique (37) servant à la sollicitation électrique du moteur de réglage (21), **caractérisé en ce qu'**un deuxième carter (26) est associé au module électronique (37), ledit deuxième carter étant fixé depuis l'extérieur au premier carter (14), une paroi (29) du premier carter (14) ou du deuxième carter (26) séparant le moteur de réglage (21) du module électronique (37).

2. Dispositif de réglage d' arbre à cames selon la revendication 1, **caractérisé en ce que** le moteur de réglage (21) est un moteur à courant continu sans balais.

3. Dispositif de réglage d' arbre à cames selon la revendication 1 ou 2, **caractérisé en ce qu'**une jonction électrique peut être établie entre le moteur de réglage (21) et le module électronique (37) par fixation du deuxième carter (26) au premier carter (14) par le biais d'une jonction enfichable (41, 42).

4. Dispositif de réglage d'arbre à cames selon la revendication 1 ou 2, **caractérisé en ce qu'**un raccordement électrique du moteur de réglage (21) et/ou du module électronique (37) est réalisé à l'aide d'au moins un câble électrique s'étendant à l'extérieur du premier carter (14) et/ou du deuxième carter (26).

5. Dispositif de réglage d'arbre à cames selon l'une quelconque des revendications précédentes, **caractérisé en ce que** le module électronique (37) et le deuxième carter (26a) sont disposés au moins en partie à côté du moteur de réglage (21) dans le plan radial.

6. Dispositif de réglage d'arbre à cames selon la revendication 5, **caractérisé en ce que** le premier carter (14a) et le deuxième carter (26a) sont formés conjointement d'un seul tenant et sont fermés conjointement à l'aide d'un couvercle (36a) commun.

7. Dispositif de réglage d'arbre à cames selon l'une quelconque des revendications précédentes, **caractérisé en ce qu'**un deuxième moteur de réglage est prévu et que le module électronique (37) est disposé au moins en partie entre les deux moteurs de réglage.

8. Dispositif de réglage d'arbre à cames selon l'une quelconque des revendications précédentes, **caractérisé en ce que** le module électronique (37) comporte une carte (43) dotée de composants électroniques (59, 60, 61, 62, 63 et/ou 64).

9. Dispositif de réglage d' arbre à cames selon la revendication 7, **caractérisé en ce que** la paroi fait partie du premier carter (14) et que la carte (43) est directement fixée à la paroi.

10. Dispositif de réglage d'arbre à cames selon la revendication 7 ou 8, caractérisé on ce que plusieurs cartes (43) sont disposées parallèlement à la paroi les unes derrière les autres et sont connectées entre elles.

11. Dispositif de réglage d'arbre à cames selon l'une quelconque des revendications précédentes, **caractérisé en ce que** le module électronique (37) contient au moins un capteur (capteur à effet de Hall 59) pour détecter les états de fonctionnement du moteur de réglage (21).

12. Dispositif de réglage d'arbre à cames selon l'une quelconque des revendications précédentes, **caractérisé en ce que** des bornes (50) sont intégrées dans le module électronique (37) pour les trois phases du moteur de réglage (21).

13. Dispositif de réglage d'arbre à cames selon l'une quelconque des revendications précédentes, **caractérisé en ce qu'**une pâte thermoconductrice ou un coussinet thermoconducteur (38) est prévu entre le module électronique (37) et les composants voisins.

14. Dispositif de réglage d'arbre à cames selon l'une quelconque des revendications précédentes, **caractérisé en ce que** le module électronique (37) comporte un dispositif de refroidissement.

15. Dispositif de réglage d'arbre à cames selon l'une quelconque des revendications précédentes, **caractérisé en ce que** le premier carter (14) forme avec le moteur de réglage (21) une unité de construction pouvant être fixée au carter (12) du dispositif de réglage d'arbre à cames (11) et que le deuxième carter (26) forme avec le module électronique (37) une autre unité de construction séparée pouvant être fixée au premier carter (14).

16. Dispositif de réglage d'arbre à cames selon la revendication 15, **caractérisé en ce que** le carter (12) du dispositif de réglage d'arbre à cames (11) peut être fixé depuis l'extérieur à un carter de culasse.

17. Dispositif de réglage d'arbre à cames selon la revendication 14, **caractérisé en ce que** les fonctions de culasse sont intégrées dans l'unité de construction avec le premier carter (14) et le moteur de réglage (21).

18. Dispositif de réglage d'arbre à cames selon l'une quelconque des revendications précédentes, **caractérisé en ce que** la paroi est formée par le deuxième carter (26) et que la paroi reçoit un palier de roulement de l'arbre de réglage (10) du moteur de réglage (21).

19. Dispositif de réglage d'arbre à cames selon l'une quelconque des revendications précédentes, **caractérisé en ce que** le module électronique (37) est enrobé par fusion ou injection.

20. Dispositif de réglage d'arbre à cames selon l'une quelconque des revendications précédentes, **caractérisé en ce que** le premier et/ou le deuxième carter (14, 26) disposent d'au moins un dispositif de refroidissement séparé ou commun.
